# EUROPEAN PATENT SPECIFICATION

(11) **EP 1 725 789 B1**
(45) Date of publication and mention of the grant of the patent: **28.05.2008**
(21) Application number: 04716693.9
(22) Date of filing: 03.03.2004
(51) Int. Cl.: F16H 55/36, F16D 7/02

(54) **A PULLEY ASSEMBLY**
RIEMENSCHEIBENBAUEINHEIT
ENSEMBLE POULIE

(43) Date of publication of application: 29.11.2006
(73) Proprietor: Dayco Europe S.r.l. con Unico Socio, Frazione Chieti Scalo 66100 Chieti (IT)
(72) Inventor: CARICCIA, Gianluca, I-10090 Romano Canvese (IT); ROLANDO, Adriano, I-10086 Rivarolo (IT)
(74) Representative: Jorio, Paolo
(86) International application number: PCT/IT2004/000106
(87) International publication number: WO 2005/085680

(56) References cited:
- EP-A- 1 279 807
- DE-A- 4 407 157
- DE-A- 10 103 082
- DE-A- 19 653 386

## Description

### TECHNICAL FIELD

The present invention relates to a pulley assembly, in particular for a drive belt for connecting a plurality of accessory members to an engine shaft of an internal-combustion engine.

### BACKGROUND ART

Pulley assemblies are known that comprise: a hub, for being rigidly connected to a driving member, for example an engine shaft of an internal-combustion engine; a pulley coaxial with the hub and for co-operating with a drive belt; and a first elastically deformable connection element set between the hub and the pulley, having the function of flexible coupling, for the purpose of filtering transmission of torsional oscillations between the hub and the pulley.

Pulley assemblies of the type briefly described above are used in the automotive field for belt driving of auxiliary members of the engine, such as, for example, the alternator, the pump of the cooling water or of a hydraulic-steering system, and the compressor of an air-conditioning system.

Said known assemblies further generally comprise an integrated torsional damper, which is formed by an annular inertial element coaxial with the hub, or inertial ring, and by a second elastic connecting element set between the hub and the inertial ring. The moment of inertia of the inertial ring and the elastic characteristic of the second elastic connecting element are calibrated so as to create a "mass-spring" system for correcting the natural dynamic behaviour of the engine shaft and, in particular, to attenuate the peak of oscillations corresponding to the first natural frequency of torsional vibration, enabling operation without reaching critical conditions of resonance.

The flexible coupling between the hub and the pulley is necessary for filtering the transmission of torsional oscillations of the engine shaft to the accessories and for absorbing instantaneous differences in the rate of rotation in particular operating conditions, such as, for example, starting of the engine and sharp decelerations thereof, in which, on account of the high levels of inertia of the driven members, in particular of the alternator, the pulley tends to overrun the hub.

According to a first known embodiment, the flexible coupling is formed by a ring made of elastomeric material set radially or axially between the hub and the pulley, and fixed to both of them, for example via vulcanization. In order to exercise effectively the function of "filter" referred to above, the elastomeric material must have a low stiffness. The component is consequently critical both from the mechanical standpoint, in so far as the high deformability of the material contrasts with the requirements of high mechanical resistance that must be respected in order to transmit the required torque values, and, above all, from the thermal standpoint. In this perspective, in fact, it is impossible to bestow on the material characteristics of resistance to high temperatures.

In an attempt to solve the problems set forth above, solutions have been proposed in which the flexible coupling is formed by one or more springs, which replace the ring made of elastomeric material.

In particular, according to a first solution known from DE-A-4 407 157, which to the knowledge of the present applicant does not appear to have had any practical applications, the flexible coupling is formed by a helical spring, which is wound about the hub and has one end rigidly connected to the pulley and the opposite end slidably mounted on the hub with the interposition of a friction block. There is consequently a difference in behaviour according to the direction of the torque; when the hub tends to draw the pulley, i.e., during normal operation of the drive, the spring tends to tighten on the hub and to transmit motion with an increasing stiffness; when, instead, the pulley tends to overrun the hub, the spring tends to uncouple from the hub itself.

A drawback linked to the above solution lies in the large axial dimensions. A further drawback is represented by the high level of noise due to the contact between the turns of the spring and the hub.

The document EP-A-1 279 807 illustrates a pulley assembly in which the hub is coupled to the pulley by means of a pair of helical springs constrained in such a way as to work in compression when the hub draws the pulley. In this way, the stiffness of the flexible coupling increases progressively with the transmitted torque, until a behaviour that is substantially rigid is reached for high values of the transmitted torque. When, instead, the pulley tends to rotate faster than the hub, the coupling uncouples the pulley from the hub itself.

Albeit providing a partial solution to the drawbacks referred to previously, this solution is not free from problems.

In the first place, since in certain operating conditions, in particular at starting of the engine, there are violent torsional oscillations with relative rotation between the hub and the pulley in both directions, a substantially rigid behaviour in one of the two directions of transmission of the torque subjects the belt and the entire drive to anomalous stresses, with consequent risks of slipping of the belt and noise.

In addition, the absence of uncoupling in the normal direction of transmission of the torque subjects the spring to high compressive stresses that can bring about yielding due to fatigue during the life of the component.

Finally, since the transmission of torque occurs by friction on the outer turns of the springs, the latter must undergo machining so that they will co-operate in an optimal way with the conjugated friction profile. They are consequently specially built springs, which have a considerable cost such as to render the entire pulley assembly much more expensive than previously known solutions and hence unlikely to be accepted by the market.

DE-A-101 03 082 discloses a pulley assembly for a belt drive according to the preamble of claim 1.

An object of the present invention is to provide a pulley assembly that solves the prior art problems and, in particular, allows the assembly to be easily adapted to different belt drives and has reduced cost and dimensions.

This object is achieved by a pulley assembly as claimed in claim 1.

### BRIEF DESCRIPTION OF THE DRAWINGS

For a better understanding of the present invention, described in what follows are three preferred embodiments, provided by way of non-limiting example and with reference to the attached drawings, in which:
Figure 1 is an axial sectional view of a pulley assembly according to a first embodiment of the present invention;
Figure 2 is a schematic cross-sectional view of a detail of the pulley assembly of Figure 1; and
Figure 3 is a graph that illustrates the torque/relative rotation characteristic of the pulley assembly of Figure 1.

### BEST MODE FOR CARRYING OUT THE INVENTION

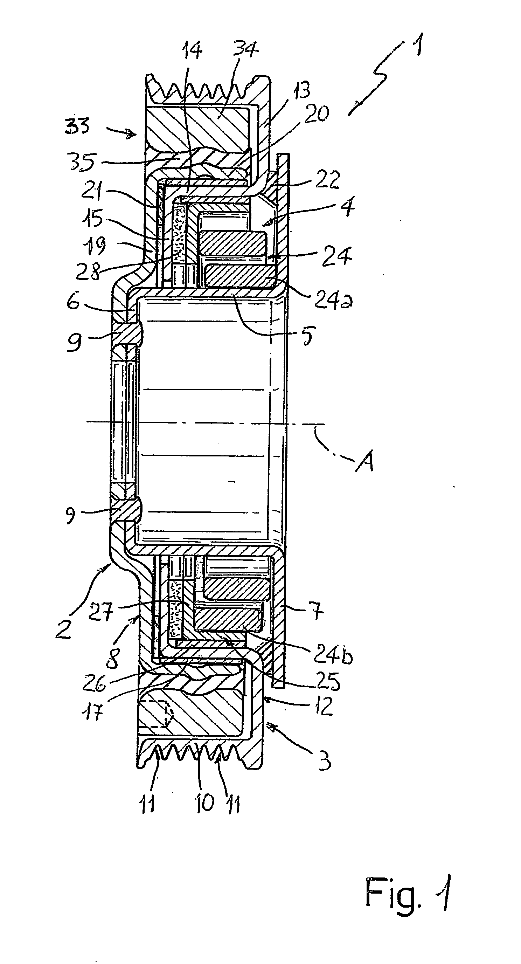

With reference to Figure 1, designated as a whole by 1 is a pulley assembly according to the present invention.

The pulley assembly 1 basically comprises: a hub 2 with axis A, which is adapted to be rigidly fixed on an engine shaft (not illustrated) of an internal-combustion engine; a pulley 3, which is coaxial with the hub; and a flexible coupling 4, which is set between the hub 2 and the pulley 3.

The hub 2 is conveniently made of metal plate and comprises integrally: a cylindrical wall 5; a radial internal flange 6 extending inwards from one axial end of the cylindrical wall 5 facing in use the engine; and a radial external flange 7 extending outwards from one opposite axial end of the cylindrical wall 5. The hub 2 further comprises an annular flange 8 rigidly fixed to the internal flange 6, for example via riveting 9 or welding, which carries a torsional damper 33, as will be described in greater detail in what follows.

The flange 8 is substantially bell-shaped and is formed by a disk-like portion 19 rigidly fixed to the internal flange 6 of the hub 2 and by an annular wall 20 extending axially from an outer periphery of the disk-like portion, which is externally coaxial with the cylindrical wall 5, towards the external flange 7.

The pulley 3, which is conveniently of the poly-V type, is conveniently made of metal plate via successive operations of pressing and rolling and integrally comprises a substantially cylindrical rim 10, defining on an outer surface thereof a plurality of races 11, and a disk 12 extending integrally inwards from one axial end of the rim 10 facing the flange 7 of the hub.

In greater detail, the disk 12 comprises: a plane outer annular wall 13 integral with the rim 10; an intermediate cylindrical wall 14 externally coaxial with the cylindrical wall 5 of the hub 2 and internally coaxial with the annular wall 20 of the flange 8; and a plane annular wall 15 extending radially inwards, facing the disk-like portion 19 of the flange 8.

The pulley 3 is supported axially and radially with respect to the hub 2.

In particular, the radial support is defined by a bushing 17, which is conveniently made of anti-friction material and is radially set between the wall 14 of the pulley 3 and the annular wall 20 of the flange 8.

The axial support is defined by a plane ring 21 set between the wall 15 of the pulley 3 and the disk-like portion 19 of the hub 2, as well as by an annular element 22 set between the flange 7 of the hub 2 and the wall 13 of the pulley 3.

The ring 21 is conveniently made of anti-friction plastic material; the element 22 may be made of plastic or elastomeric material and can have a function of damping in regard to the relative oscillations between the hub 2 and the pulley 3, in addition to that of seal in regard to the external agents.

The flexible coupling 4 set between the hub 2 and the pulley 3 comprises a conical helical spring 24 with rectangular cross section, which has an internal turn 24a constrained rotationally to the hub 2 and an external turn 24b constrained rotationally to a thrust ring 25 mounted so as to turn within the cylindrical wall 14 of the pulley 3 with interposition of a bushing 26, conveniently made of anti-friction material. The spring 24 is pre-compressed axially between the external flange 7 of the hub 2 and a face of a radial wall 27 of the thrust ring 25, on an opposite face of which there is fixed, for example by means of an adhesive, a disk 28 made of friction material, co-operating axially with the wall 15 of the pulley 3.

The thrust ring constitutes an intermediate element between the hub 2 and the pulley 3, and is rotationally free also with respect to the latter.

The properties of friction of the disk 28 and the axial load exerted by the spring 24, which is substantially constant, are chosen so as to define a maximum value Cmax of the transmissible torque through the flexible coupling 4, above which there is a loss of adherence and hence angular uncoupling between the hub 2 and the pulley 3.

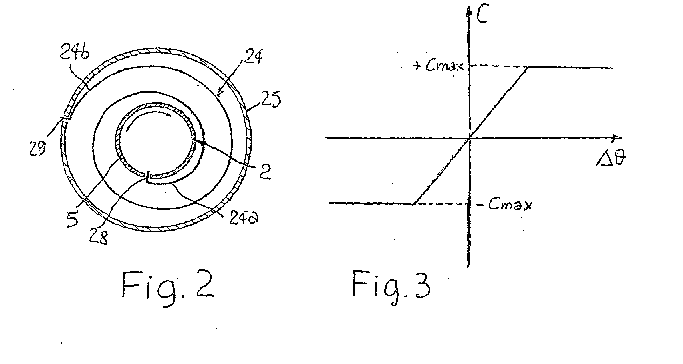

As is illustrated schematically in Figure 2, the spring 24 is constrained positively both to the hub 2 and to the thrust ring 25, i.e., without any relative slipping in the circumferential direction, in such a way as to undergo tensile force in the normal operating condition, i.e., when the hub 2 tends to draw the pulley 3 in the direction of rotation indicated by an arrow.

The constraint between the end of the spring 24 and, respectively, the hub 2 and the thrust ring 25 can be obtained in any known way; for example, as illustrated schematically in Figure 2, the ends of the spring 24 can be bent or else deformed or machined so as to define radial projections 28, 29 that engage respective seats in the wall 5 of the hub 2 and in the thrust ring 25.

The integrated torsional damper 33, in itself known, is formed by an inertial ring 34 housed in the space between the annular wall 20 of the flange 8 and the rim 10 of the pulley 3, and by a coupling ring 35 made of elastomeric material, set radially between the annular wall 20 and the inertial ring 34, for example by means of a force fit, in order to couple them torsionally in an elastic way.

Operation of the pulley assembly 1 is described in what follows.

The torsional damper 33 functions in a conventional way and is not described in detail in what follows.

The torque between the hub 2 and the pulley 3 is transmitted through the flexible coupling 4 and hence, basically, through the spring 24. By appropriately sizing the stiffness (in the torsional direction) of the spring 24, the flexible coupling 4 enables "filtering" of the torsional oscillations between the hub 2 and the pulley 3. The behaviour of the flexible coupling 4 is symmetrical in the two directions of relative rotation and is linear within the limits of the maximum transmissible torque, i.e., there is obtained a transmitted torque proportional to the relative rotation between the hub 2 and pulley 3.

In the presence of violent torsional oscillations of the hub 2 with respect to the pulley 3, such as occur for example at starting of the engine, or else with sudden acceleration or deceleration of the engine following upon high levels of inertia of the accessory members, the instantaneous torque acting on the coupling 4 can reach the maximum transmissible value Cmax, thus leading to an uncoupling between the hub and the pulley. This occurs in a symmetrical way, in both of the directions of relative rotation between the hub 2 and pulley 3, thus preventing in any operating condition anomalous stresses on the spring 24 and, more in general, on the members of the drive.

Hence, the flexible coupling 4 has the characteristic illustrated in the graph presented in Figure 4, in which the abscissa represents the angles of relative rotation between the hub and pulley and the ordinate the torque transmitted: for values of torque that are lower, in absolute value, than the maximum transmissible value, the characteristic is a straight line passing through the origin, the slope of which is defined by the stiffness (in the torsional direction) of the spring 24; for values of relative rotation that are greater, in absolute value, than the relative rotation corresponding to the maximum value of the transmissible torque, the characteristic is defined by two half lines parallel to the axis of the abscissa, i.e., with constant torque equal to the maximum transmissible value in each of the two directions (respectively, +Cmax and -Cmax).

From an examination of the characteristics of the pulley assembly 1 made according to the present invention, the advantages that it enables are evident.

In the first place, since the behaviour of the flexible coupling 4 is symmetrical in the two directions of the relative rotation between the hub 2 and the pulley 3, i.e., said flexible coupling uncouples the pulley 3 from the hub in both of the directions of relative rotation when a pre-set maximum value Cmax of the torque is reached, there is no risk of subjecting the spring 24 to anomalous stresses, in particular at starting of the engine, nor of transmitting any over-tensioning to the belt such as to bring about any slipping thereof with consequent noise. Below said value, the coupling behaves in a perfectly elastic way, with a linear characteristic in both of the directions of relative rotation.

Since the spring 24 does not have to co-operate directly by friction with the pulley 3, but must simply draw along the thrust ring 25 working in a tensile way (or in a compressive way in the cases of reversal of torque alone), thanks to the end constraints, the spring 24 may be of a conventional type and may not need to undergo any particular machining operations; its cost is consequently reduced. Also the costs of construction and assembly of the entire unit 1 are reduced.

Furthermore, since the maximum transmissible torque is defined exclusively by the characteristics of friction of the disk 28 and by the axial pre-loading of the conical helical spring 24, the calibration of said torque value is much simpler; it is hence more convenient to modify said value to adapt the value to different design specifications of the belt drive.

Finally, it is clear that modifications and variations may be made to the pulley assembly 1 described herein, without thereby departing from the sphere of protection defined by the ensuing claims.

In particular, the spring 24 could be constrained so as to work in compression when the hub 2 tends to draw the pulley 3. Furthermore, the spring 24 could be constrained between the thrust element 25 and the pulley 3, and the friction disk 28 could be set between the thrust element 25 and the hub 2.

The assembly 1 could be used for applications other than the one described, in the automotive field or elsewhere, whenever it is necessary to connect a pulley to a rotating member, whether a driving member or a driven member, elastically.

## Claims

1. A pulley assembly for a belt drive, in particular for an internal-combustion engine, comprising:
- a hub (2) for being constrained to a rotating member and to rotate therewith about an axis (A) of its own;
- a pulley (3) coaxial with the hub (2) and for co-operating with a belt;
- and a flexible coupling (4) set between said hub (2) and said pulley (3) comprising elastic means (24) for rotational coupling of said pulley (3) to said hub (2) and friction means (25, 28) with limited transmission of torque for uncoupling said pulley (3) from said hub (2) when a pre-set maximum torque value is exceeded, said elastic means comprising a spring (24) wound about said axis and generating a first elastic load for the transmission of the torque between said hub (2) and said pulley (3), said friction means comprising an intermediate element (25), which is rotationally free with respect to said hub (2) and to said pulley (3), said spring (24) being positively constrained between said intermediate element (25) and a first member (2) chosen between said hub (2) and said pulley (3), said intermediate element (25) co-operating through a friction coupling with a second member (3) chosen between said hub (2) and said pulley (3), said spring (24) generating an axial thrust distinct from said first elastic load and acting on said friction coupling to define said maximum torque value, said intermediate element (25) being a thrust ring co-operating axially with said second member (3),
said pulley assembly being **characterized in that** said first spring (24) is a conical helical spring with a rectangular cross-section.

2. The pulley assembly according to Claim 1, **characterized in that** said axial thrust is constant.

3. The pulley assembly according to Claim 1 or Claim 2, **characterized in that** it comprises a friction element (28) set between said thrust ring (25) and said second member (3).

4. The pulley assembly according to any one of the preceding claims, **characterized in that** it comprises a damping element (17) set between said thrust ring (25) and said first member (2).

5. The pulley assembly according to any one of the preceding claims, **characterized in that** the first member is said hub (2) and **in that** the second member is said pulley (3).

6. The pulley assembly according to any one of the preceding claims, **characterized in that** it comprises an integrated torsional damper (33).

## Patentansprüche

1. Riemenscheibenanordnung für einen Riemenantrieb, insbesondere für einen Verbrennungsmotor, die umfasst:
eine Nabe (2), die fest mit einem Drehelement verbunden ist und sich damit um eine eigene Achse (A) dreht;
eine Riemenscheibe (3) koaxial zu der Nabe (2), die mit einem Riemen zusammenwirkt; und
eine flexible Kupplung (4), die zwischen die Nabe (2) und die Riemenscheibe (3) eingesetzt ist, und eine elastische Einrichtung (24), die die Riemenscheibe (3) drehend mit der Nabe (2) kuppelt, sowie Reibeinrichtungen (25, 28) mit begrenzter Übertragung von Drehmoment umfasst, die die Riemenscheibe (3) von der Nabe (2) entkuppeln, wenn ein voreingestelltes maximales Drehmoment überschritten wird, wobei die elastische Einrichtung eine um die Achse gewickelte Feder (24) umfasst, die eine erste elastische Last zum Übertragen des Drehmomentes zwischen der Nabe (2) und der Riemenscheibe (3) erzeugt, die Reibeinrichtung ein Zwischenelement (25) umfasst, das sich in Bezug auf die Nabe (2) und die Riemenscheibe (3) frei drehen kann, die Feder (24) formschlüssig zwischen dem Zwischenelement (25) und einem ersten Element (2) eingeschlossen ist, das aus der Nabe (2) und der Riemenscheibe (3) ausgewählt wird, das Zwischenelement (25) über eine Reibkupplung mit einem zweiten Element (3) zusammenwirkt, das aus der Nabe (2) und der Riemenscheibe (3) ausgewählt wird, die Feder (24) einen Axialdruck erzeugt, der sich von der ersten elastischen Last unterscheidet und auf die Reibkupplung wirkt, um das maximale Drehmoment zu definieren, und das Zwischenelement (25) ein Druckring ist, der axial mit dem zweiten Element (3) zusammenwirkt,
wobei die Riemenscheibenanordnung **dadurch gekennzeichnet ist, dass** die erste Feder (24) eine Kegel-Schraubenfeder mit einem rechteckigen Querschnitt ist.

2. Riemenscheibenanordnung nach Anspruch 1, **dadurch gekennzeichnet, dass** der axiale Druck konstant ist.

3. Riemenscheibenanordnung nach Anspruch 1 oder Anspruch 2, **dadurch gekennzeichnet, dass** sie ein Reibelement (28) umfasst, das zwischen den Druckring (25) und das zweite Element (31) eingesetzt ist.

4. Riemenscheibenanordnung nach einem der vorangehenden Ansprüche, **dadurch gekennzeichnet, dass** sie ein Dämpfelement (17) umfasst, das zwischen den Druckring (25) und das erste Element (2) eingesetzt ist.

5. Riemenscheibenanordnung nach einem der vorangehenden Ansprüche, **dadurch gekennzeichnet, dass** das erste Element die Nabe (2) ist und das zweite Element die Riemenscheibe (3) ist.

6. Riemenscheibenanordnung nach einem der vorangehenden Ansprüche, **dadurch gekennzeichnet, dass** sie einen integrierten Dreh-Dämpfer (33) umfasst.

## Revendications

1. Ensemble poulie pour une transmission à courroie, en particulier pour un moteur à combustion interne, comprenant :
- un moyeu (2) destiné à être contraint sur un élément rotatif et à tourner avec celui-ci autour d'un axe (A) propre à lui-même ;
- une poulie (3) coaxiale avec le moyeu (2) et pour coopérer avec une courroie ;
- et un couplage flexible (4) placé entre ledit moyeu (2) et ladite poulie (3) comprenant des moyens élastiques (24) pour le couplage rotatif de ladite poulie (3) audit moyeu (2) et des moyens de friction (25, 28) avec une transmission limitée de couple pour découpler ladite poulie (3) dudit moyeu (2) lorsqu'une valeur de couple maximum prédéterminée est dépassée, lesdits moyens élastiques comprenant un ressort (24) enroulé autour dudit axe et générant une première charge élastique pour la transmission du couple entre ledit moyeu (2) et ladite poulie (3), lesdits moyens de friction comprenant un élément intermédiaire (25), qui est libre de façon rotative par rapport audit moyeu (2) et à ladite poulie (3), ledit ressort (24) étant contraint de façon positive entre ledit élément intermédiaire (25) et un premier élément (2) choisi entre ledit moyeu (2) et ladite poulie (3), ledit élément intermédiaire (25) coopérant par l'intermédiaire d'un couplage à friction avec un second élément (3) choisi entre ledit moyeu (2) et ladite poulie (3), ledit ressort (24) générant une poussée axiale distincte de ladite première charge élastique et agissant sur ledit couplage à friction pour définir ladite valeur de couple maximum, ledit élément intermédiaire (25) étant une rondelle de butée coopérant de façon axiale avec ledit second élément (3),
ledit ensemble poulie étant **caractérisé en ce que** ledit premier ressort (24) est un ressort hélicoïdal conique avec une section transversale rectangulaire.

2. Ensemble poulie selon la revendication 1, **caractérisé en ce que** ladite poussée axiale est constante.

3. Ensemble poulie selon la revendication 1 ou la revendication 2, **caractérisé en ce qu'**il comprend un élément de friction (28) placé entre ladite rondelle de butée (25) et ledit second élément (3).

4. Ensemble poulie selon l'une quelconque des revendications précédentes, **caractérisé en ce qu'**il comprend un élément amortisseur (17) placé entre ladite rondelle de butée (25) et ledit premier élément (2).

5. Ensemble poulie selon l'une quelconque des revendications précédentes, **caractérisé en ce que** le premier élément est ledit moyeu (2) et **en ce que** le second élément est ladite poulie (3).

6. Ensemble poulie selon l'une quelconque des revendications précédentes, **caractérisé en ce qu'**il comprend un amortisseur à torsion intégré (33).
